# EUROPÄISCHE PATENTANMELDUNG

(11) **EP 3 015 216 A1**
(43) Veröffentlichungstag der Anmeldung: **04.05.2016**
(21) Anmeldenummer: 15179694.3
(22) Anmeldetag: 04.08.2015
(51) Int. Cl.: B23P 6/00, B22F 3/105, B22F 5/04, B22F 7/06, F01D 5/00

(54) **REPARATURVERFAHREN UND VORRICHTUNG ZUM GENERATIVEN REPARIEREN EINES BAUTEILS**

(30) Priorität: 30.10.2014 DE 102014222159
(71) Anmelder: MTU Aero Engines AG, 80995 München (DE)
(72) Erfinder: Ladewig, Alexander, 83707 Bad Wiessee (DE); Schlothauer, Steffen, 85253 Erdweg (DE); Heß, Thomas, 81541 München (DE); Liebl, Christian, 85461 Bockhorn (DE)

(57) **Zusammenfassung**

Die Erfindung betrifft ein Reparaturverfahren für ein Bauteil (12) und umfasst die Schritte Entfernen eines beschädigten Bauteilbereichs des Bauteils (12) unter Ausbildung wenigstens einer Trennfläche, Anordnen des Bauteils (12) in einer Prozesskammer (11) einer Vorrichtung (10) zum generativen Wiederherstellen zumindest des entfernten Bauteilbereichs, Ermitteln von ersten Strukturdaten des in der Prozesskammer (11) angeordneten Bauteils (12) mittels eines Messsystems (26) der Vorrichtung (10), wobei die ersten Strukturdaten eine Ist-Geometrie des Bauteils (12) charakterisieren, Bereitstellen von zweiten Strukturdaten des Bauteils (12) mittels einer Recheneinrichtung (32) der Vorrichtung (10), wobei die zweiten Strukturdaten eine Soll-Geometrie des Bauteils (12) charakterisieren, Ermitteln von dritten Strukturdaten anhand der ersten und der zweiten Strukturdaten mittels der Recheneinrichtung (32), wobei die dritten Strukturdaten eine Soll-Geometrie des entfernten Bauteilbereichs des Bauteils (12) charakterisieren, und generatives Wiederherstellen des entfernten Bauteilbereichs auf der wenigstens einen Trennfläche des Bauteils (12) anhand der dritten Strukturdaten mit Hilfe von Aufbaumitteln (13) der Vorrichtung (10). Die Erfindung betrifft weiterhin eine Vorrichtung (10) zum generativen Reparieren eines Bauteils (12).

## Beschreibung

Die Erfindung betrifft ein Reparaturverfahren für ein Bauteil, insbesondere für eine Schaufel einer Gasturbine. Weiterhin betrifft die Erfindung eine Vorrichtung zum generativen Reparieren eines Bauteils.

Für die Reparatur von verschlissenen oder beschädigten Bauteilen mittels generativer Reparaturverfahren ist auf Grund der individuellen Form und Beschädigung jedes Bauteils die individuelle Erfassung der exakten Ist-Geometriedaten und eine zeitintensive Anpassung der üblicherweise als CAD-Modell vorliegenden Soll-Geometriedaten erforderlich. Anschließend müssen für die generative Wiederherstellung des beschädigten Bauteilbereichs die Position, Lage und Kontur der zu bearbeitenden Bauteiloberflächen im Prozess- bzw. Bauraum der verwendeten Vorrichtung exakt definiert werden.

Aus der US 2012/0222306 A1 ist ein Reparaturverfahren bekannt, bei welchem beschädigte Turbinenbauteile zunächst auf eine vorbestimmte Geometrie zurück geschnitten werden. Anschließend wird das Bauteil in eine Prozesskammer einer Laserschmelzvorrichtung eingesetzt und mit einem Träger in einer definierten Position angeordnet. Danach erfolgt schichtweise der generative Wiederaufbau des beschädigten Bereichs, um das Turbinenbauteil zu reparieren.

Als nachteilig an dem bekannten Verfahren ist der Umstand anzusehen, dass individuelle Beschädigungen der Bauteile nur vergleichsweise begrenzt berücksichtigt werden können, so dass in bestimmten Fällen unnötig viel Material entfernt werden muss, um zu der vorbestimmten Geometrie zu gelangen.

Aufgabe der vorliegenden Erfindung ist es, ein generatives Reparaturverfahren sowie eine Vorrichtung zum generativen Reparieren eines Bauteils der eingangs genannten Art zu schaffen, die eine verbesserte Berücksichtigung individueller Schadensbilder ermöglichen.

Die Aufgabe wird erfindungsgemäß durch ein Reparaturverfahren gemäß Anspruch 1 sowie durch eine Vorrichtung zum generativen Reparieren eines Bauteils gemäß Anspruch 12 gelöst. Vorteilhafte Ausgestaltungen mit zweckmäßigen Weiterbildungen der Erfindung sind in den jeweiligen Unteransprüchen angegebene, wobei vorteilhafte Ausgestaltungen des Reparaturverfahrens als vorteilhafte Ausgestaltungen der Vorrichtung und umgekehrt anzusehen sind.

Ein erster Aspekt der Erfindung betrifft ein Reparaturverfahren, welches eine verbesserte Berücksichtigung individueller Schadensbilder ermöglicht. Das Reparaturverfahren umfasst dabei erfindungsgemäß die Schritte Entfernen eines beschädigten Bauteilbereichs des Bauteils unter Ausbildung wenigstens einer Trennfläche, Anordnen des Bauteils in einer Prozesskammer einer Vorrichtung zum generativen Wiederherstellen zumindest des entfernten Bauteilbereichs, Ermitteln von ersten Strukturdaten des in der Prozesskammer angeordneten Bauteils mittels eines Messsystems der Vorrichtung, wobei die ersten Strukturdaten eine Ist-Geometrie des Bauteils charakterisieren, Bereitstellen von zweiten Strukturdaten des Bauteils mittels einer Recheneinrichtung der Vorrichtung, wobei die zweiten Strukturdaten eine Soll-Geometrie des Bauteils charakterisieren, Ermitteln von dritten Strukturdaten anhand der ersten und der zweiten Strukturdaten mittels der Recheneinrichtung, wobei die dritten Strukturdaten eine Soll-Geometrie des entfernten Bauteilbereichs des Bauteils charakterisieren, und generatives Wiederherstellen des entfernten Bauteilbereichs auf der wenigstens einen Trennfläche des Bauteils anhand der dritten Strukturdaten mit Hilfe von Aufbaumitteln der Vorrichtung. Mit anderen Worten ist es im Unterschied zum Stand der Technik vorgesehen, dass zunächst der beschädigte Bauteilbereich des Bauteils entfernt wird. Vorzugsweise erfolgt dieser Schritt dabei derart, dass das Entfernen soweit möglich auf den beschädigten Bauteilbereich beschränkt wird. Anschließend wird das Bauteil in der Prozesskammer der Vorrichtung zum generativen Wiederherstellen angeordnet, wo zunächst eine Ermittlung der Ist-Geometrie des Bauteils durch ein Messsystem der Vorrichtung erfolgt. Dies bedeutet, dass die Ist-Geometrie nicht wie bislang üblich außerhalb der Vorrichtung, sondern unmittelbar im Prozessraum der Vorrichtung, wo in einem späteren Verfahrensschritt auch der generative Wiederaufbau des beschädigten Bauteilbereichs durchgeführt wird, ermittelt wird. Die Ist-Geometrie wird dabei in Form erster Strukturdaten elektronisch kodiert. Dabei kann es grundsätzlich vorgesehen sein, dass die Ermittlung der Ist-Geometrie zumindest im Wesentlichen auf das unmittelbare Umfeld des beschädigten Bauteilbereichs beschränkt wird. Hierdurch können entsprechende Zeitvorteile sowohl bei der Ermittlung der Ist-Geometrie als auch bei der anschließenden Berechnung des aufzubauenden Volumenkörpers realisiert werden. Alternativ kann aber natürlich auch die überwiegende oder vollständige Ist-Bauteilgeometrie ermittelt werden, wodurch eine breitere Datenbasis für die weiteren Verfahrensschritte zur Verfügung steht. Anschließend wird die Soll-Geometrie des Bauteils in Form zweiter Strukturdaten mittels einer Recheneinrichtung bereitgestellt. Auch die zweiten Strukturdaten können grundsätzlich auf die unmittelbare Umgebung des beschädigten bzw. wieder aufzubauenden Bauteilbereichs beschränkt sein. Alternativ kann aber auch vorgesehen sein, dass die zweiten Strukturdaten die überwiegende oder vollständige Soll-Geometrie des betreffenden Bauteils charakterisieren. Mittels der Recheneinrichtung werden anhand der ersten und zweiten Strukturdaten dritte Strukturdaten ermittelt, wobei die dritten Strukturdaten eine Soll-Geometrie des entfernten bzw. des wieder aufzubauenden Bauteilbereichs des Bauteils charakterisieren. In einfachster Ausgestaltung wird somit lediglich die Differenz zwischen den ersten und zweiten Strukturdaten ermittelt, die dem fehlenden Bauteilbereich bzw. dem aufzubauenden Volumenkörper entspricht. Anhand der dritten Strukturdaten wird dann im Prozessraum der Vorrichtung der entfernte Bauteilbereich auf der wenigstens einen Trennfläche des Bauteils generativ wieder aufgebaut. Durch dieses modulare Reparaturverfahren und den beschriebenen Algorithmus zur flexiblen Erzeugung von Bauteilkonturen in Abhängigkeit der direkt in der Vorrichtung ermittelten Ist-Geometrie kann der bislang erforderliche Mess-, Anpassungs- und Justierungsprozess deutlich optimiert oder sogar vollständig vermieden werden. Grundsätzlich kann das erfindungsgemäße Verfahren in einfachster Ausgestaltung aus den genannten Verfahrensschritten bestehen und keine weiteren Verfahrensschritte umfassen.

In einer vorteilhaften Ausgestaltung der Erfindung ist vorgesehen, dass der beschädigte Bauteilbereich außerhalb der Vorrichtung mittels eines Trennverfahrens abgetrennt wird. Dies erlaubt eine gute Berücksichtigung des individuellen Schadensbilds, wobei der Trennschritt einerseits soweit möglich auf den beschädigten Bauteilbereich beschränkt werden kann, andererseits aber auch eine möglichst ebene Trennfläche ausgebildet werden kann, wodurch üblicherweise das Ermitteln der Ist-Geometrie und der generative Wiederaufbau erleichtert werden.

Weitere Vorteile ergeben sich, indem das Bauteil mittels einer Halteeinrichtung in einer vorbestimmten räumlichen Orientierung in der Prozesskammer festgelegt wird. Dies vereinfacht eine definierte räumliche Ausrichtung des Bauteils und damit der Trennfläche. Grundsätzlich kann vorgesehen sein, dass die Halteeinrichtung ausgebildet ist, das Bauteil in Abhängigkeit der ersten, zweiten und/oder dritten Strukturdaten in der Prozesskammer anzuordnen. Zu diesem Zweck kann die Halteeinrichtung optional mit der Recheneinrichtung gekoppelt sein.

In einer weiteren vorteilhaften Ausgestaltung der Erfindung werden die ersten Strukturdaten mittels eines berührungslosen Messsystems der Vorrichtung ermittelt. Insbesondere optische Messsysteme bieten den Vorteil einer schnellen und präzisen Erfassung der Ist-Geometrie und lassen sich vergleichsweise einfach in die Vorrichtung integrieren. Beispielsweise kann als Messsystem ein Streifenprojektionssystem verwendet werden. Hierbei projiziert ein Projektor ein Streifenmuster auf das Bauteil, das in Abhängigkeit von der Form des Bauteils deformiert wird. Eine oder mehrere, vorzugsweise hoch auflösende Kameras zeichnen das deformierte Muster auf, das dann als Grundlage für die Bestimmung der Topographie bzw. der Ist-Geometrie des Bauteils dient. Allerdings können auch andere optische Messsysteme wie beispielsweise 3D-Kamerasysteme oder dergleichen verwendet werden.

In einer weiteren vorteilhaften Ausgestaltung der Erfindung umfasst das Ermitteln der dritten Strukturdaten das Anpassen von ersten Strukturdaten und/oder von zweiten Strukturdaten mittels der Recheneinrichtung. Mit anderen Worten ist es vorgesehen, dass ein so genanntes Matching von Ist-Geometrie und Soll-Geometrie durchgeführt wird, um das Bauteil und seine Modelldaten korrekt zueinander auszurichten. Die Ausrichtung kann damit rein softwarebasiert bzw. mit Hilfe der Recheneinrichtung erfolgen, wodurch weitere Zeit- und Kosteneinsparungen ermöglicht werden, da das Bauteil selbst ortsfest bezüglich der Prozesskammer angeordnet werden kann.

In weiterer Ausgestaltung der Erfindung ist es dabei vorgesehen, dass das Anpassen das Triangulieren und/oder die Translation und/oder die Rotation und/oder die Skalierung von ersten und/oder zweiten Strukturdaten mittels der Recheneinrichtung umfasst. Hierdurch können Abweichungen zwischen der Ist- und der Sollgeometrie des Bauteils optimal kompensiert werden.

Weitere Vorteile ergeben sich, indem das Anpassen anhand wenigstens eines unbeschädigten Bauteilbereichs des Bauteils und/oder anhand von Flächenschwerpunkten des Bauteils und/oder anhand von Knotenpunkten und/oder anhand einer Ausgleichungsrechnung mittels der Recheneinrichtung durchgeführt wird. Dies erlaubt eine besonders präzise Anpassung der ersten und zweiten Strukturdaten aneinander, wodurch entsprechend präzise dritte Strukturdaten für den wieder aufzubauenden Bauteilbereich ermittelt werden können.

In einer weiteren vorteilhaften Ausgestaltung der Erfindung ist vorgesehen, dass das Anpassen das Ermitteln eines Übergangsprofils zwischen der Ist-Geometrie und der Soll-Geometrie mittels der Recheneinrichtung umfasst. Mit Hilfe eines solchen Übergangsprofils können einen Schwellenwert über- bzw. unterschreitende Abweichungen, die beispielsweise durch lokalen Verschleiß oder durch Produktionstoleranzen entstanden sind, zwischen Ist- und Soll-Geometrie ausgeglichen werden.

Dabei hat es sich in weiterer Ausgestaltung der Erfindung als vorteilhafte gezeigt, wenn das Übergangsprofil unter Berücksichtigung von Bauteilgeometrieparametern und/oder Materialparametern und/oder vorrichtungsabhängigen Parametern mittels der Recheneinrichtung ermittelt wird. Beispielsweise kann ein durch die jeweils verwendete Vorrichtung vorgegebener maximaler Bauwinkel bei der Ermittlung des Übergangsprofils berücksichtigt werden, um unzulässige geometrische Strukturen in den dritten Strukturdaten zuverlässig zu verhindern. Entsprechendes gilt für die Einbeziehung von Bauteilgeometrieparametern, beispielsweise der Geometrie von Kühlluftkanälen, und Materialparametern, beispielsweise des Schmelzpunktes des verwendeten Metallpulvers oder dergleichen. Damit wird eine besonders hohe Reparaturqualität sichergestellt.

Weitere Vorteile ergeben sich, indem zum generativen Wiederherstellen des entfernten Bauteilbereichs mittels der Recheneinrichtung eine Transformation der dritten Strukturdaten in Schichtdaten erfolgt, anhand derer ein schichtweiser Aufbau des entfernten Bauteilbereichs mit Hilfe der Aufbaumittel durchgeführt wird. Mit anderen Worten werden mittels der Recheneinrichtung Volumendaten in Schichtdaten umgerechnet, wodurch der schichtweise generative Aufbau des wieder herzustellenden Bauteilbereichs entsprechend erleichtert wird.

Zumindest der generativ hergestellte Bauteilbereich kann nach der generativen Wiederherstellung insbesondere mittels eines Trennverfahrens und/oder eines Beschichtungsverfahrens nachbearbeitet, beispielsweise beschichtet oder poliert werden.

Ein zweiter Aspekt der Erfindung betrifft eine Vorrichtung zum generativen Reparieren eines Bauteils, insbesondere einer Schaufel einer Gasturbine. Erfindungsgemäß umfasst die Vorrichtung dabei zumindest eine Prozesskammer, in welcher das Bauteil zum generativen Wiederherstellen zumindest eines entfernten Bauteilbereichs anordenbar ist. Weiterhin umfasst die Vorrichtung ein Messsystem, mittels welchem erste Strukturdaten des in der Prozesskammer angeordneten Bauteils ermittelbar sind, wobei die ersten Strukturdaten eine Ist-Geometrie des Bauteils charakterisieren, sowie eine Recheneinrichtung, mittels welcher einerseits zweite Strukturdaten des Bauteils bereitstellbar sind, wobei die zweiten Strukturdaten eine Soll-Geometrie des Bauteils charakterisieren, und andererseits dritte Strukturdaten anhand der ersten und der zweiten Strukturdaten ermittelbar sind, wobei die dritten Strukturdaten zumindest den entfernten Bauteilbereich des Bauteils charakterisieren. Des Weiteren umfasst die Vorrichtung Aufbaumittel zum generativen Wiederherstellen des entfernten Bauteilbereichs anhand der dritten Strukturdaten. In einfachster Ausgestaltung kann die erfindungsgemäße Vorrichtung aus den genannten Elementen bestehen und keine weiteren Einrichtungen oder dergleichen umfassen. Indem das Messsystem in die Vorrichtung integriert ist und das beschädigte Bauteil direkt in der Prozesskammer vermessen kann, um dessen Ist-Geometrie zu ermitteln, ermöglicht die erfindungsgemäße Vorrichtung eine verbesserte Berücksichtigung individueller Schadensbilder. Darüber hinaus können mit Hilfe der erfindungsgemäßen Vorrichtung erhebliche Zeit- und Kostenvorteile realisiert werden, da neben einem manuellen Vermessen des Bauteils außerhalb der Vorrichtung auch auf einen Positionierungsschritt des Bauteils innerhalb der Vorrichtung verzichtet werden. Statt dessen kann der fehlende Bauteilbereich mit Hilfe der Recheneinrichtung aus den ersten und zweiten Strukturdaten ermittelt und ohne weitere Positionierungsschritte oder dergleichen auf der Trennfläche des Bauteils wieder aufgebaut werden. Weitere Vorteile sind den Beschreibungen des ersten Erfindungsaspekts zu entnehmen.

In einer vorteilhaften Ausgestaltung der Erfindung ist vorgesehen, dass die Aufbaumittel zum generativen Wiederherstellen des entfernten Bauteilbereichs mindestens eine Pulverzuführung zum Auftrag von mindestens einem pulverförmigen Bauteilwerkstoff auf eine Bauteilplattform und/oder auf eine Trennfläche des Bauteils sowie mindestens eine Hochenergiequelle umfasst, mittels welcher im Bereich einer Aufbau- und Fügezone der Bauteilplattform und/oder der Trennfläche zumindest ein Hochenergiestrahl für ein schichtweises und lokales Verschmelzen und/oder Versintern des Bauteilwerkstoffs erzeugbar ist. Die Hochenergiequelle kann beispielsweise als Laser- und/oder Elektronenstrahlquelle ausgebildet sein.

Weitere Vorteile ergeben sich, indem die Vorrichtung eine Halteeinrichtung umfasst, mittels welcher das Bauteil in einer vorbestimmten räumlichen Orientierung in der Prozesskammer festlegbar ist. Die bezüglich der Prozesskammer ortsfeste Anordnung des Bauteils erleichtert insbesondere die Ausrichtung bzw. Anpassung von Ist- und Soll-Geometrie.

Weitere Vorteile ergeben sich, wenn das Messsystem als optisches Messsystem ausgebildet ist. Dies erlaubt eine schnelle, präzise und berührungslose Ermittlung der Ist-Geometrie des Bauteils. Beispielsweise kann das Messsystem als Streifenprojektionssystem ausgebildet sein. Hierdurch ist es besonders einfach in die Vorrichtung integrierbar.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Schnittansicht eines Ausführungsbeispiels einer erfindungsgemäßen Vorrichtung zum generativen Reparieren eines Bauteils; und
- Fig. 2: eine Schnittansicht durch eine Soll-Geometrie des Bauteils.

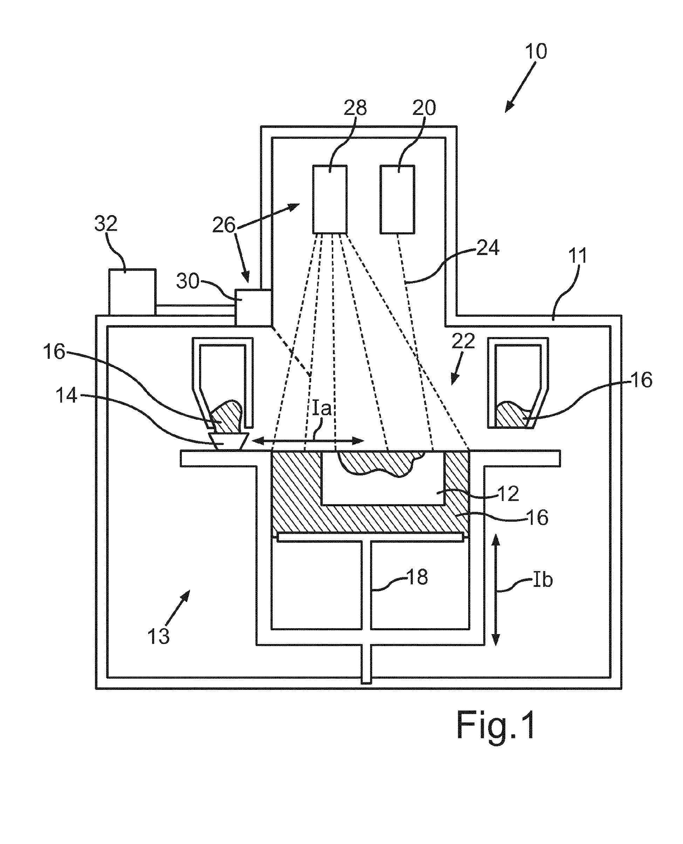

Fig. 1 zeigt eine schematische Schnittansicht eines Ausführungsbeispiels einer erfindungsgemäßen Vorrichtung 10 zum generativen Reparieren eines Bauteils 12, welches vorliegend als Laufschaufel einer Turbine eines Flugtriebwerks ausgebildet ist. Die Vorrichtung 10 umfasst eine Prozesskammer 11, in welcher sich Aufbaumittel 13 zum generativen Wiederherstellen eines Bauteilbereichs des Bauteils 12 befinden. Die Aufbaumittel 13 umfassen im vorliegenden Ausführungsbeispiel eine gemäß Doppelpfeil Ia bewegbare Pulverzuführung 14 zum Auftrag von mindestens einem pulverförmigen Bauteilwerkstoff 16 auf eine gemäß Doppelpfeil Ib bewegbare Bauteilplattform 18 befindet. Weiterhin ist eine vorliegend als Laser ausgebildete Hochenergiequelle 20 vorgesehen, mittels welcher im Bereich einer Aufbau- und Fügezone 22 der Bauteilplattform 18 ein Laserstrahl 24 für ein schichtweises und lokales Verschmelzen und/oder Versintern des Bauteilwerkstoffs 16 erzeugt wird. Einrichtungen zum Einstellen der räumlichen Ablenkung, der Fokussierung und der thermischen Leistung des Laserstrahls 24 sind aus Gründen der Übersichtlichkeit nicht dargestellt.

Zum generativen Reparieren des Bauteils 12 wird dieses zunächst mittels eines Trennverfahrens bearbeitet, um das beschädigte Volumen bzw. den beschädigten Bauteilbereich unter Ausbildung wenigstens einer Trennfläche vollständig zu entfernen. Anschließend wird das Bauteil 12 in der Prozesskammer 11 angeordnet und vorzugsweise derart festgelegt, dass die Trennfläche zumindest überwiegend nach oben gerichtet ist.

Die Vorrichtung 10 umfasst weiterhin ein Messsystem 26, mittels welchem erste Strukturdaten des in der Prozesskammer 11 angeordneten Bauteils 12 ermittelt werden, wobei die ersten Strukturdaten eine Ist-Geometrie des Bauteils charakterisieren. Das Messsystem 26 kann grundsätzlich modular ausgebildet sein, um einfach an unterschiedliche Vorrichtungen 10, Prozesskammern 11 und/oder Bauteile 12 angepasst werden zu können. Im gezeigten Ausführungsbeispiel ist das Messsystem 26 dazu als Streifenprojektionssystem ausgebildet. Dementsprechend projiziert ein Projektor 28 ein Streifenmuster auf das Bauteil 12, wobei das Streifenmuster in Abhängigkeit von der Form des Bauteils deformiert wird. Eine hoch auflösende Kamera 30 zeichnet das deformierte Muster auf, das als Grundlage für die Bestimmung der Topographie bzw. der Ist-Geometrie des Bauteils 12 dient. Dabei kann es ausreichend sein, dass die Kamera 30 nur den Bereich der Trennfläche des Bauteiles erfasst, um hieraus die ersten Strukturdaten - beispielsweise in Form eines CAD-Konturzugs - zu ermitteln. Weiterhin ist das Messsystem 26 zum Austausch von Daten mit einer Recheneinrichtung 32 gekoppelt. Die Recheneinrichtung 32 stellt zweite Strukturdaten des Bauteils 12 bereit, wobei die zweiten Strukturdaten eine Soll-Geometrie des Bauteils charakterisieren. Anhand der ersten und der zweiten Strukturdaten ermittelt die Recheneinrichtung 32 dann dritte Strukturdaten, wobei die dritten Strukturdaten zumindest den entfernten Bauteilbereich des Bauteils 12 bzw. das aufzubauende Volumenelement charakterisieren.

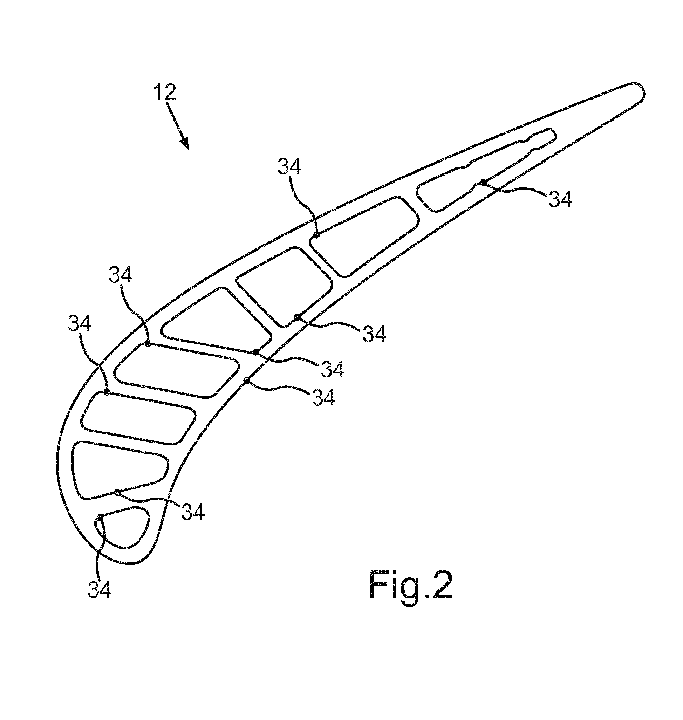

Dabei kann vorgesehen sein, dass die ersten und die zweiten Strukturdaten, das heißt die Ist- und die Sollgeometrie des Bauteils 12, mittels der Recheneinrichtung 32 zunächst zueinander ausgerichtet werden. Eine Positionierung, Skalierung und/oder Ausrichtung der Soll-Geometrie erfolgt dabei mittels der Recheneinrichtung 32 unter Berücksichtigung der Ist-Geometrie bzw. von nicht-verschlissenen Bauteilbereichen des Bauteils 12, über Flächenschwerpunkte und/oder Best-Fit-Algorithmen. Fig. 2 zeigt zur Verdeutlichung eine Schnittansicht durch eine Soll-Geometrie des Bauteils 12. Man erkennt verschiedene Punkte 34, die einzeln oder in beliebiger Kombination als Knotenpunkte, Stützpunkte und/oder Flächenschwerpunkten des Bauteils 12 zur Anpassung von Ist- und Soll-Geometrie, beispielsweise über Best-Fit-Algorithmen, verwendet werden können. Die Punkte 34 können für einen bestimmten Bauteiltyp vorbestimmt und beispielsweise in der Soll-Geometrie bzw. den zweiten Strukturdaten mitkodiert und/oder dynamisch ermittelt werden.

Die Verrechnung von Ist- und Soll-Geometrie-Daten mittels der Recheneinrichtung 32 kann zusätzliche Schritte zur Kompensation von unzulässigen Abweichungen der Ist-Geometrie des Bauteiles 12 umfassen. In diesem Fall wird mittels der Recheneinrichtung 32 ein Übergangsprofil zwischen der Ist-Geometrie und der Soll-Geometrie errechnet und bei der Ermittlung der dritten Strukturdaten berücksichtigt. Die Ermittlung des Übergangsprofils kann zum Beispiel definierte Verschiebungen der Knotenpunkte von triangulierten Geometriedaten in einem definierten Bauteilbereich umfassen. Dadurch wird ein stetiger Übergang von der Ist- zur Soll-Geometrie sichergestellt. Auf Basis bekannter Prozessparameter können zudem Randbedingungen definiert und bei der Erstellung des Übergangsprofils berücksichtigt werden. Daraus ergibt sich für jedes Bauteil 12 ein individueller Volumenkörper mit einem kontinuierlichen Übergang von der Ist- auf die Soll-Geometrie. In Abhängigkeit der dritten Strukturdaten wird dann der zuvor entfernte Bauteilbereich mit Hilfe der Aufbaumittel 13 schichtweise wieder generativ aufgebaut, um das Bauteil 12 zu reparieren. Anschließend kann zumindest der wieder hergestellte Bauteilbereich bedarfsweise nachbearbeitet werden.

Durch das in die Vorrichtung 10 integrierte optische Messsystem 26 und die vorstehend dargestellten Verfahrensschritte zur flexiblen Erzeugung von Bauteilkonturen in Abhängigkeit der individuellen Ist-Geometrie des bereits in der Vorrichtung 10 platzierten Bauteils 12 können der Mess-, Anpassungs- und Justierungsprozess stark optimiert und entsprechende Zeit- und Kostenvorteile realisiert werden.

### Bezugszeichenliste:

- 10: Vorrichtung
- 11: Prozesskammer
- 12: Bauteil
- 13: Aufbaumittel
- 14: Pulverzuführung
- 16: Bauteilwerkstoff
- 18: Bauteilplattform
- 20: Hochenergiequelle
- 22: Fügezone
- 24: Laserstrahl
- 26: Messsystem
- 28: Projektor
- 30: Kamera
- 32: Recheneinrichtung
- 34: Punkt

## Patentansprüche

1. Reparaturverfahren für ein Bauteil (12), insbesondere für eine Schaufel einer Gasturbine, umfassend die Schritte
- Entfernen eines beschädigten Bauteilbereichs des Bauteils (12) unter Ausbildung wenigstens einer Trennfläche;
- Anordnen des Bauteils (12) in einer Prozesskammer (11) einer Vorrichtung (10) zum generativen Wiederherstellen zumindest des entfernten Bauteilbereichs;
- Ermitteln von ersten Strukturdaten des in der Prozesskammer (11) angeordneten Bauteils (12) mittels eines Messsystems (26) der Vorrichtung (10), wobei die ersten Strukturdaten eine Ist-Geometrie des Bauteils (12) charakterisieren;
- Bereitstellen von zweiten Strukturdaten des Bauteils (12) mittels einer Recheneinrichtung (32) der Vorrichtung (10), wobei die zweiten Strukturdaten eine Soll-Geometrie des Bauteils (12) charakterisieren;
- Ermitteln von dritten Strukturdaten anhand der ersten und der zweiten Strukturdaten mittels der Recheneinrichtung (32), wobei die dritten Strukturdaten eine Soll-Geometrie des entfernten Bauteilbereichs des Bauteils (12) charakterisieren; und
- generatives Wiederherstellen des entfernten Bauteilbereichs auf der wenigstens einen Trennfläche des Bauteils (12) anhand der dritten Strukturdaten mit Hilfe von Aufbaumitteln (13) der Vorrichtung (10).

2. Reparaturverfahren nach Anspruch 1,
**dadurch gekennzeichnet, dass**
der beschädigte Bauteilbereich außerhalb der Vorrichtung (10) mittels eines Trennverfahrens abgetrennt wird.

3. Reparaturverfahren nach Anspruch 1 oder 2,
**dadurch gekennzeichnet, dass**
das Bauteil (12) mittels einer Halteeinrichtung in einer vorbestimmten räumlichen Orientierung in der Prozesskammer (11) festgelegt wird.

4. Reparaturverfahren nach einem der Ansprüche 1 bis 3,
**dadurch gekennzeichnet, dass**
die ersten Strukturdaten mittels eines berührungslosen Messsystems (26) der Vorrichtung (10) ermittelt werden.

5. Reparaturverfahren nach einem der Ansprüche 1 bis 4,
**dadurch gekennzeichnet, dass**
das Ermitteln der dritten Strukturdaten das Anpassen von ersten Strukturdaten und/oder von zweiten Strukturdaten mittels der Recheneinrichtung (32) umfasst.

6. Reparaturverfahren nach Anspruch 5,
**dadurch gekennzeichnet, dass**
das Anpassen das Triangulieren und/oder die Translation und/oder die Rotation und/oder die Skalierung von ersten und/oder zweiten Strukturdaten mittels der Recheneinrichtung (32) umfasst.

7. Reparaturverfahren nach Anspruch 5 oder 6,
**dadurch gekennzeichnet, dass**
das Anpassen anhand wenigstens eines unbeschädigten Bauteilbereichs des Bauteils (12) und/oder anhand von Flächenschwerpunkten des Bauteils (12) und/oder anhand von Knotenpunkten und/oder anhand einer Ausgleichungsrechnung mittels der Recheneinrichtung (32) durchgeführt wird.

8. Reparaturverfahren nach einem der Ansprüche 5 bis 7,
**dadurch gekennzeichnet, dass**
das Anpassen das Ermitteln eines Übergangsprofils zwischen der Ist-Geometrie und der Soll-Geometrie mittels der Recheneinrichtung (32) umfasst.

9. Reparaturverfahren nach Anspruch 8,
**dadurch gekennzeichnet, dass**
das Übergangsprofil unter Berücksichtigung von Bauteilgeometrieparametern und/oder Materialparametern und/oder vorrichtungsabhängigen Parametern mittels der Recheneinrichtung (32) ermittelt wird.

10. Reparaturverfahren nach einem der Ansprüche 1 bis 9,
**dadurch gekennzeichnet, dass**
zum generativen Wiederherstellen des entfernten Bauteilbereichs mittels der Recheneinrichtung (32) eine Transformation der dritten Strukturdaten in Schichtdaten erfolgt, anhand derer ein schichtweiser Aufbau des entfernten Bauteilbereichs mit Hilfe der Aufbaumittel (13) durchgeführt wird.

11. Reparaturverfahren nach einem der Ansprüche 1 bis 10,
**dadurch gekennzeichnet, dass**
zumindest der generativ hergestellte Bauteilbereich insbesondere mittels eines Trennverfahrens und/oder eines Beschichtungsverfahrens nachbearbeitet wird.

12. Vorrichtung (10) zum generativen Reparieren eines Bauteils (12), insbesondere einer Schaufel einer Gasturbine, umfassend
- eine Prozesskammer (11), in welcher das Bauteil (12) zum generativen Wiederherstellen zumindest eines entfernten Bauteilbereichs anordenbar ist;
- ein Messsystem (26), mittels welchem erste Strukturdaten des in der Prozesskammer (11) angeordneten Bauteils (12) ermittelbar sind, wobei die ersten Strukturdaten eine Ist-Geometrie des Bauteils (12) charakterisieren;
- eine Recheneinrichtung (32), mittels welcher
- zweite Strukturdaten des Bauteils (12) bereitstellbar sind, wobei die zweiten Strukturdaten eine Soll-Geometrie des Bauteils (12) charakterisieren; und
- dritte Strukturdaten anhand der ersten und der zweiten Strukturdaten ermittelbar sind, wobei die dritten Strukturdaten zumindest den entfernten Bauteilbereich des Bauteils (12) charakterisieren; sowie
- Aufbaumittel (13) zum generativen Wiederherstellen des entfernten Bauteilbereichs anhand der dritten Strukturdaten.

13. Vorrichtung (10) nach Anspruch 12,
**dadurch gekennzeichnet, dass**
die Aufbaumittel (15) zum generativen Wiederherstellen des entfernten Bauteilbereichs mindestens eine Pulverzuführung (14) zum Auftrag von mindestens einem pulverförmigen Bauteilwerkstoff (16) auf eine Bauteilplattform (18) und/oder auf eine Trennfläche des Bauteils (12) sowie mindestens eine Hochenergiequelle (20) umfasst, mittels welcher im Bereich einer Aufbau- und Fügezone (22) der Bauteilplattform (18) und/oder der Trennfläche zumindest ein Hochenergiestrahl für ein schichtweises und lokales Verschmelzen und/oder Versintern des Bauteilwerkstoffs (16) erzeugbar ist.

14. Vorrichtung (10) nach Anspruch 12 oder 13,
**dadurch gekennzeichnet, dass**
diese eine Halteeimichtung umfasst, mittels welcher das Bauteil (12) in einer vorbestimmten räumlichen Orientierung in der Prozesskammer (11) festlegbar ist.

15. Vorrichtung (10) nach einem der Ansprüche 12 bis 14,
**dadurch gekennzeichnet, dass**
das Messsystem (26) als optisches Messsystem ausgebildet ist.
